(19) **Europäisches Patentamt**

**European Patent Office**

**Office européen des brevets**

(11) **EP 0 456 475 B1**

(12) **EUROPEAN PATENT SPECIFICATION**

(45) Date of publication and mention
of the grant of the patent:
**28.02.2001   Bulletin 2001/09**

(51) Int Cl.7: **G06F 7/50**, G06F 7/48

(21) Application number: **91304129.9**

(22) Date of filing: **08.05.1991**

(54) **Programmable logic device**

Programmierbare logische Schaltung

Dispositif logique programmable

(84) Designated Contracting States:
**DE FR GB NL**

(30) Priority:   **10.05.1990   US 522336**

(43) Date of publication of application:
**13.11.1991   Bulletin 1991/46**

(60) Divisional application: **00202612.8 / 1 046 982**

(73) Proprietor: **Xilinx, Inc.**
**San Jose, California 95124-3400 (US)**

(72) Inventors:
• **Hsieh, Hung-Cheng**
**Sunnyvale, California 94087 (US)**
• **Erickson, Charles R.**
**Fremont, California 94536 (US)**
• **Carter, William S.**
**Santa Clara, California 95051 (US)**
• **Cheung, Edmond Y.**
**San Jose, California 95120 (US)**

(74) Representative: **Jones, Ian**
**W.P. THOMPSON & CO.**
**Celcon House**
**289-293 High Holborn**
**London WC1V 7HU (GB)**

(56) References cited:
EP-A- 0 333 884          DE-A- 3 828 290
US-A- 4 218 747          US-A- 4 706 216

• Proceedings, First Intern. Conference on
Computer Technology, Systems and Applica
tions, Hamburg, DE, May 1987, pp531-542; Trilhe
et al: 'WSI-The challenge of the future'

## Description

This invention relates to programmable or configurable logic devices and to integrated circuit structures including such devices.

One kind of function performed in programmable logic devices is arithmetic. A device such as a configurable logic array of Xilinx, Inc., assignee of the present invention, can perform arithmetic as well as a multitude of other logic functions. Such devices are described in U.S. Patents 4,870,302 and 4,706,216, and U.S. Patent Application Serial No. 07/387,566, which are incorporated herein by reference. Because these devices are intended for general purpose functions, arithmetic is relatively slow and requires a significant amount of silicon area.

Other programmable logic devices, such as the programmable array logic device described in U.S. Patent No. 4,124,899 and user programmable devices described in U.S. Patent No. 4,758,745 also can be programmed to perform arithmetic. These two patents are also incorporated by reference. In these devices the speed of performing arithmetic and other functions which use carry logic is limited by propagation of the carry signal, and the general purpose logic used to implement the carry function is significant.

For understanding how logic devices perform arithmetic, and particularly what causes delay, the following discussion of arithmetic functions will focus on adders. However, the discussion can easily be extended to apply to subtractors, incrementers, decrementers, and accumulators, in addition to other circuits which use a carry-logic.

The following discussion will focus on operation of the middle stages in a multi-bit adder. The least significant bit is a special case because there can be no carry signal to be received from a a less significant bit.

The most significant bit is a special case because the carry bit can be used for determining an overflow condition. These two special cases will be discussed in detail later.

In the accompanying drawings:

Fig. 1a is a schematic diagram showing one stage of a conventional full-adder.

Fig. 1b is a schematic symbol for the conventional full-adder stage shown in Fig. 1a.

Fig. 2 is a schematic diagram of two full adders cascaded together.

Fig. 3 is a schematic diagram of a four-bit adder with look-ahead carry logic.

Fig. 4 is a schematic diagram of a prior art adder.

Fig. 5 is a schematic diagram of a prior art counter.

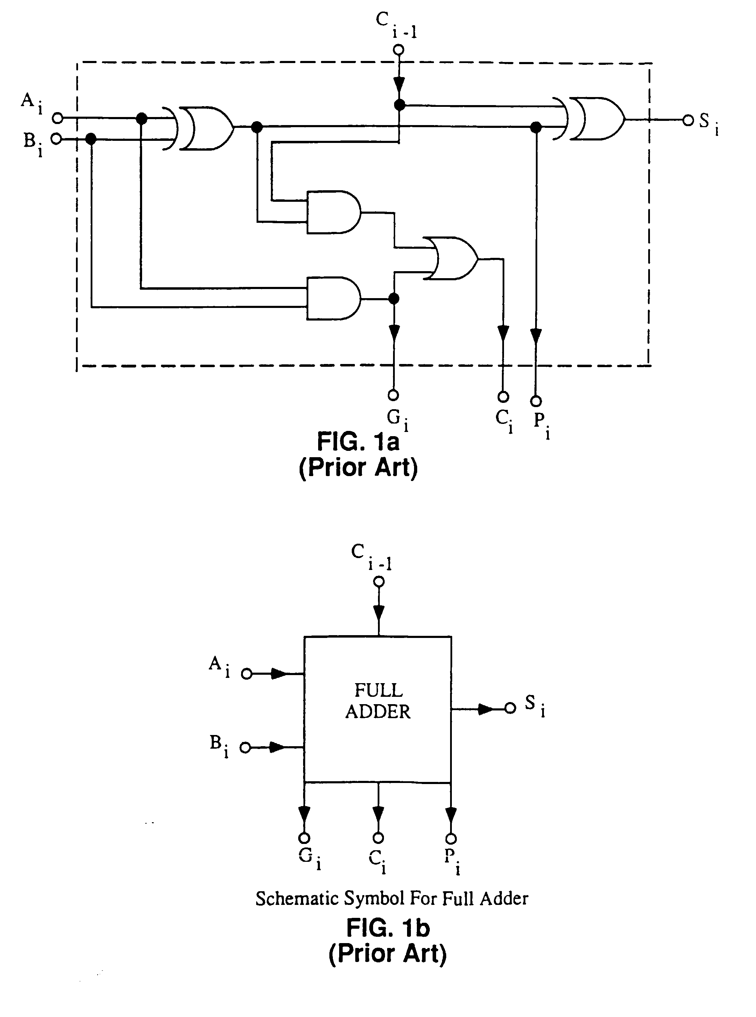

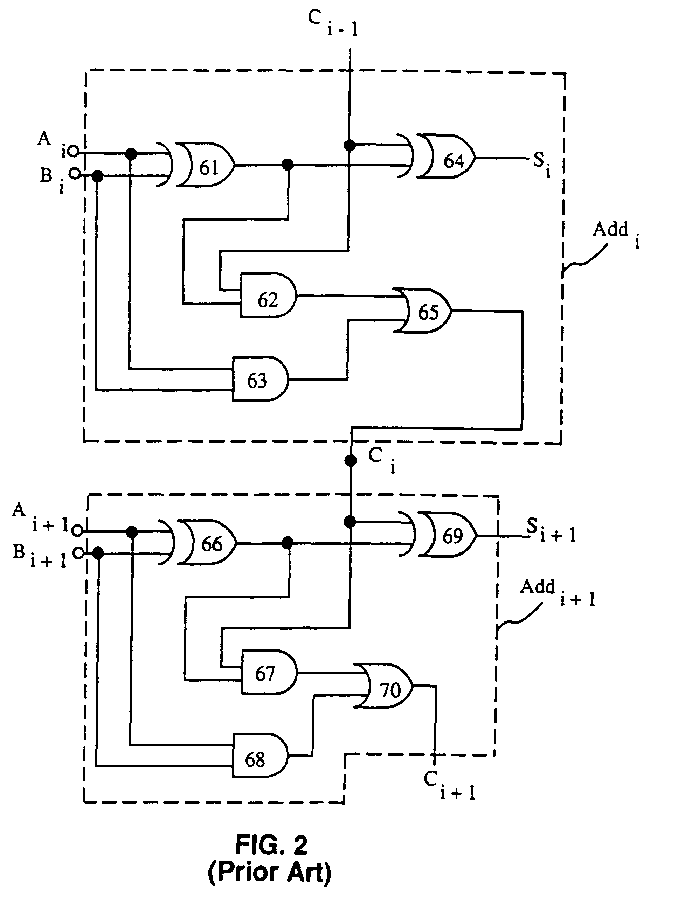

By reference to Figs. 1a, 1b and 2, it will be explained how the speed of a single bit ripple carry adder (Figs. 1a and 1b), and thus a multi-bit ripple carry adder constructed by cascading single bit adders (Fig. 2) is constrained by the speed at which the signal at the carry-in terminal is propagated to the carry-out terminal.

The Boolean logic equations governing the behavior of the single bit adder shown in Fig. 1a are:

$$(1) \qquad S_i = (A_i \oplus B_i) \oplus C_{i-1}$$

$$(2) \qquad C_i = A_i \cdot B_i + (A_i \oplus B_i) \cdot C_{i-1}$$

where

$\oplus$ represents the exclusive-or (XOR) function,
$\cdot$ represents the AND function, and
$+$ represents the OR function.

Eq.(1) shows that the sum is a function of a carry-in from a less significant bit in addition to the single bits $A_i$ and $B_i$ being added. The ripple carry adder algorithm of Eqs. (1) and (2) shows that the sum for a particular bit cannot be calculated until the carry-out from the previous bit is available. The sum $S_i$ is the output of an XOR gate and cannot be generated until each of its inputs, one of which is the carry-in signal $C_{i-1}$, is available.

Furthermore, the carry-out $C_i$ also cannot be generated until the less significant carry bit $C_{i-1}$ is available. Referring now to Fig. 2, the propagation of the carry signal through successive stages of a ripple carry adder will be explained. AND gate 67 in the second adder stage $Add_{i+1}$ receives one of its inputs from the output of XOR gate 66 after only 1 gate delay. However, assuming that the carry-in signal $C_{i-1}$ is preset (that is, that $Add_i$ is the least significant bit), AND gate 67 could wait an additional 3 gate delays for the effect of $A_i$ and $B_i$ to propagate through gates 61, 62 and 65 before its other input, the carry-out $C_i$ from the less significant bit, has been generated from the carry out of the less significant bit $C_{i-1}$ and the less significant bits $A_i$ and $B_i$ to be added. Furthermore, the carry-out $C_{i+1}$ of the second bit $Add_{i+1}$ is further delayed through 2 more gates after the carry bit $C_i$ has been generated. That is, combining the inputs on $A_{i+1}$ and $B_{i+1}$ with the carry in signal $C_i$ to generate $C_{i+1}$ requires that $C_i$ propagate through AND gate 67 and OR gate 70. Thus, there will not be a valid carry-in signal $C_{i+1}$ for input to a third stage until 5 gate delays after the application of the input signals $A_i$ and $B_i$. Thus, the speed of the conventional ripple carry adder is constrained by the speed of propagation of the carry signal. The propagation delay of a conventional ripple carry adder is $2n + 1$ gates where n is the number of stages in the multi-bit adder.

Since addition is the foundation of many other important functions and operations, it has been important to the computer industry to devise faster adder circuits by speeding up the carry propagation time. In general, these methods work by trading component density and complexity for carry propagation speed.

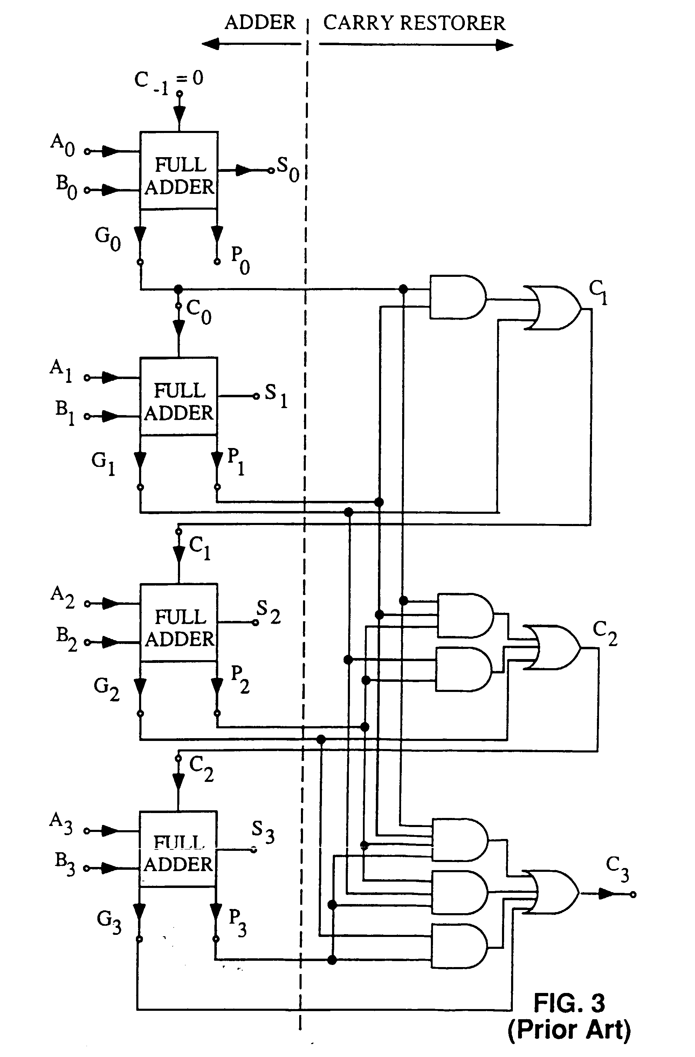

One well-known algorithm which achieves a faster carry propagation speed is called look-ahead carry logic. A circuit for implementing look-ahead carry logic is shown in Fig. 3. Understanding this logic requires the introduction of two new variables:

$$(3) \qquad P_i = A_i \oplus B_i$$

$$(4) \qquad G_i = A_i \cdot B_i$$

The variable P is called "carry propagate" because when P is high, carry-in is propagated to carry-out. The variable G is called "carry generate" because when G is high, a carry-out is generated by the bits being added.

Eqs.(1) and (2) can be rewritten in terms of these new variables:

$$(5) \qquad S_i = P_i \oplus C_{i-1}$$

$$(6) \qquad C_i = G_i + P_i \cdot C_{i-1}$$

With some minor algebraic manipulation, Eq.(6) can be used to write new equations where the carry bit at each level is dependent only on the addends at each level and the least significant carry bit. The following equations are implemented in the four bit adder shown in Fig. 3:

$$(7) \qquad (a) \qquad C_0 = A_0 B_0 = G_0$$

$$(b) \; C_1 = G_1 + P_1 C_0 = G_1 + P_1 C_0$$

$$(c) \; C_2 = G_2 + P_2 C_1 = G_2 + P_2(G_1 + P_1 C_0)$$

$$= G_2 + P_2 G_1 + P_2 P_1 C_0$$

$$(d) \; C_3 = G_3 + P_3 C_2 = G_3 + P_3(G_2 + P_2 G_1 + P_2 P_1 C_0)$$

$$= G_3 + P_3 G_2 + P_3 P_2 G_1 + P_3 P_2 P_1 C_0$$

Each $G_i$ and $P_i$ is a function only of $A_i$ and $B_i$ and not of previous carry values, as can be seen in Eqs. 3 and 4. Second, note in Eq. 7b that $C_1$ is calculated as a function of $G_1$, $P_1$, and $C_0$, and that in Eq. 7c, $C_2$ is calculated as a function of $G_2$, $P_2$ and $C_1$. But since $C_1$ has been solved in terms of $C_0$, $C_2$ can also be solved in terms of $C_0$. Attention to Eq. 7d, and the more general Eq. 6 will reveal that each $C_i$ is a function of several $G_i$'s, $P_i$'s, and $C_0$. As can be seen in Fig. 3, the less significant bit is fed into the next significant bit only for the calculation of the sum, not for the calculation of the carry bit. Since each carry bit is a function of several $G_i$'s, $P_i$'s, and $C_0$,

each carry bit is not dependent on the carry-out of any but the least significant bit. Thus the carry propagation delay of the look-ahead carry circuit is independent of the number of bits being added.

Referring still to Fig. 3 and Fig. 1a, the delay from the application of the input signals (A's and B's) to the appearance of a valid signal at the generate outputs ($G_i$'s) and propagate outputs ($P_i$'s) of an adder stage is 1 gate (this can be discerned from Fig. 1a). The delay added in Fig. 3 by the carry restorer portion of the look ahead carry circuitry is 2 gates, which makes a total of a 3 gate delay from the application of the input signals to the adder until the last carry out bit is available. This relationship is independent of the number of bits being added. For a multi-bit adder circuit, the delay will be significantly less than the delay of a conventional ripple carry adder circuit. However, as the number of stages is increased, the number of components increases significantly. Look ahead carry logic requires many more components than the conventional ripple carry adder requires to implement a stage of a multi-bit adder. This illustrates the idea that faster carry-propagation requires higher component density.

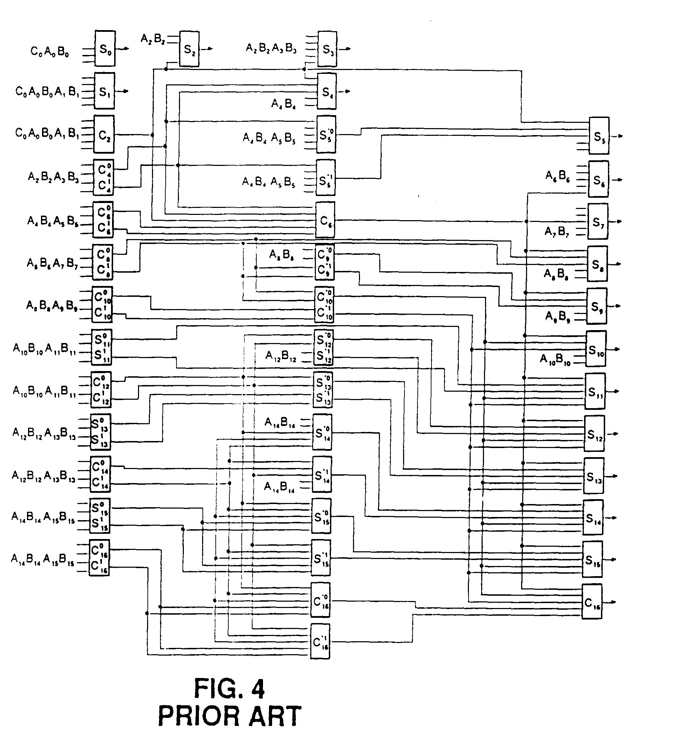

Fig. 4 shows another example of circuit components for implementing an adder. The adder of Fig. 4 is very fast, but, like the adder of Fig. 3, uses many components. Again, a faster carry logic requires a higher component density.

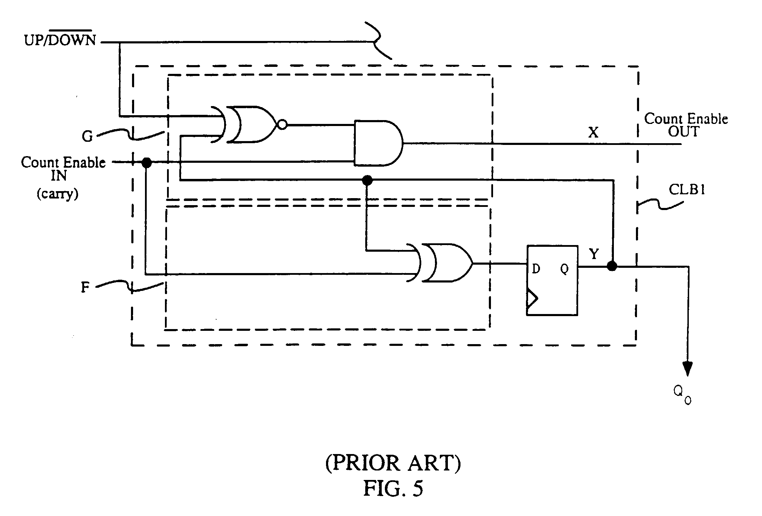

Pages 6-30 through 6-44 of Xilinx, Inc., "The Programmable Gate Array Data Book," copyright 1989, and available from Xilinx, Inc., 2100 Logic Drive, San Jose, CA 95124, show a variety of adders and counters which can be implemented in prior art Xilinx programmable logic devices. These pages of the Xilinx data book are incorporated herein by reference. Xilinx, Inc., owner of the copyright, has no objection to copying these pages but otherwise reserves all copyright rights whatsoever. The adder of Fig. 4 is shown on page 6-30 of the Xilinx data book. Fig. 5 shows a counter, also shown on page 6-34 of the Xilinx data book. In prior art Xilinx devices, calculating the sum requires one function generator, and calculating the carry function requires another function generator. Typically, two function generators are incorporated in one logic block of a Xilinx prior art configurable logic array.

Thus, in the adder circuits of both Fig. 4 and Fig. 5, and for other Xilinx prior art adder circuits as well, approximately one logic block is required for implementing each stage of an adder or counter.

DE-A-3,828,290 discloses a programable logic device comprising an array of logic blocks having input terminals and carry-in and carry-out terminals and switching means controlled by control means but in which the switching control means are disadvantageously restricted. Also, pages 531-542 of the Proceedings relating to the First International Conference on computer technology, systems and applications (May 1987) discloses configurable logic block arrays having selectable carry functions but which nevertheless suffer limitations when compared with the present invention as now defined in the claims.

According to the present invention, there is provided a programmable logic device according to claim 1.

The fast carry logic circuit is useful when implementing adders, subtractors, accumulators, and other functions that utilize carry logic. Further, in a preferred embodiment, the circuit provided by the invention is realized in dedicated hardware and dedicated interconnect circuitry within a configurable logic array. This dedicated circuitry allows an improvement in the speed of propagation of the carry signal and in the density of logic functions that use carry logic. In a preferred embodiment, a circuit using carry logic is about four times as fast as the prior art, can be realized with about one-half the number of logic blocks, and leaves general purpose logic resources free for other functions. A preferred embodiment also allows for adding or subtracting a constant to a variable without using interconnect circuitry for providing the constant.

The invention takes advantage of a Boolean functional simplification of one of two logically equivalent carry functions:

$$(8) \qquad C_i = (A \oplus B) \bullet (C_{i-1}) + (\overline{A \oplus B}) \bullet B$$

$$(9) \qquad C_i = (A \oplus B) \bullet (C_{i-1}) + (\overline{A \oplus B}) \bullet A$$

The propagation delay of the circuit provided by the invention is less dependent on the number of bits being added than a ripple carry adder, the delay per logic block (two bits) being approximately the delay of two inverters. Further, the invention achieves a fast carry logic with fewer components than in either the carry logic of a conventional full-adder or the look-ahead carry logic. The invention allows an adder to be implemented with half or less of the delay of a conventioanl ripple carry adder. When the carry logic hardware is incorporated in a configurable logic array in conjunction with general purpose logic blocks, the fast carry logic circuits preferably have a dedicated interconnect structure between carry inputs and carry outputs of adjacent logic blocks which further increases the performance.

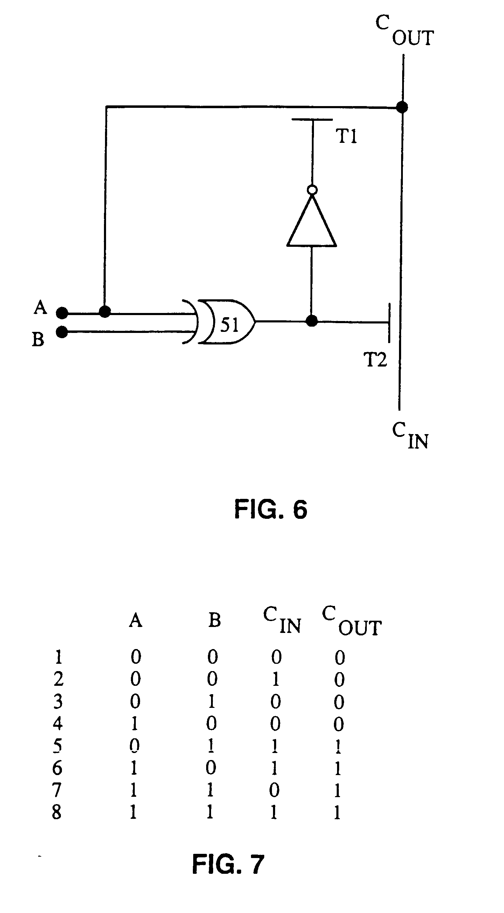

The invention is further described below, by way of example, with reference to Figures 6 to 12 of the accompanying drawings, in which:

Fig. 6 is a schematic diagram of a circuit providing one bit of carry logic according to the present invention.

Fig. 7 is a truth-table for displaying the relationship between the variables A, B, $C_{in}$ and $C_{out}$.

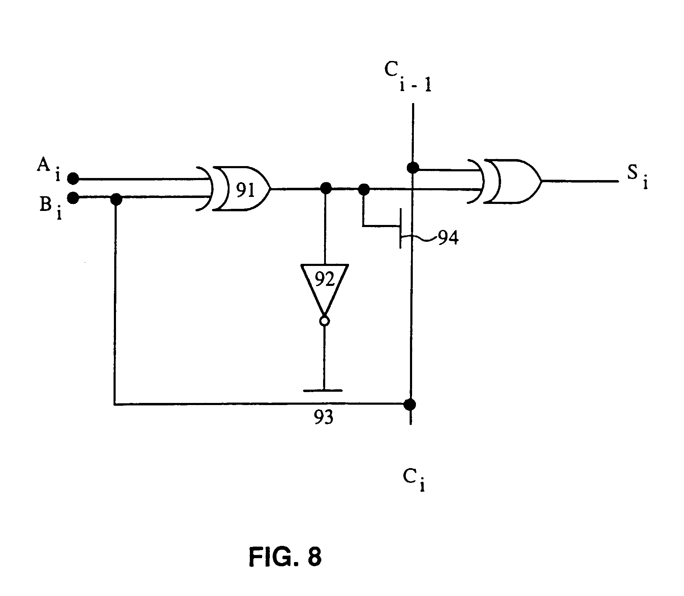

Fig. 8 is a schematic diagram of a circuit providing one bit of a full adder that uses the carry logic provided by the present invention.

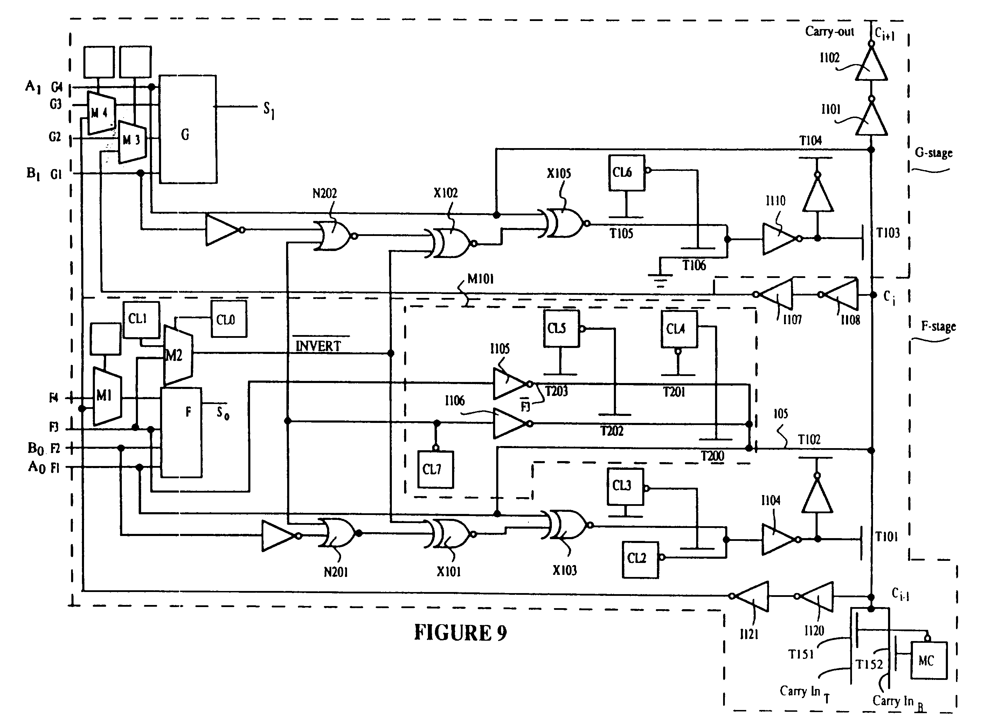

Fig. 9 is a schematic diagram of part of a logic block having two stages, each of which uses the carry logic provided by the present invention.

Fig. 9a shows a RAM embodiment of the F and G function generators of Fig. 9.

Fig. 9b shows another RAM embodiment of the F and G function generators of Fig. 9.

Fig. 9c shows one Karnaugh map for the RAM function generator of Fig. 9a or 9b.

Fig. 9d shows one of the $2^{16}$ logic functions which can be implemented by the RAM function generator of Fig. 9a or 9b.

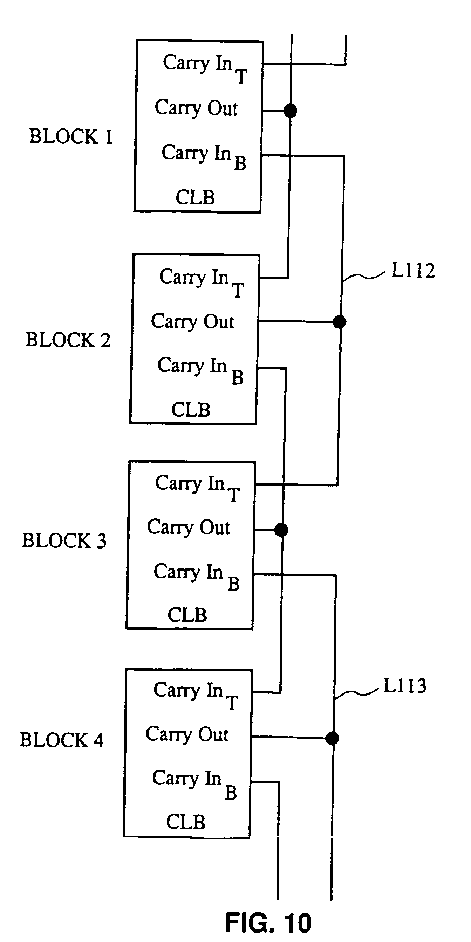

Fig. 10 is a schematic diagram of a logic array showing one embodiment of dedicated-carry-logic interconnect circuitry.

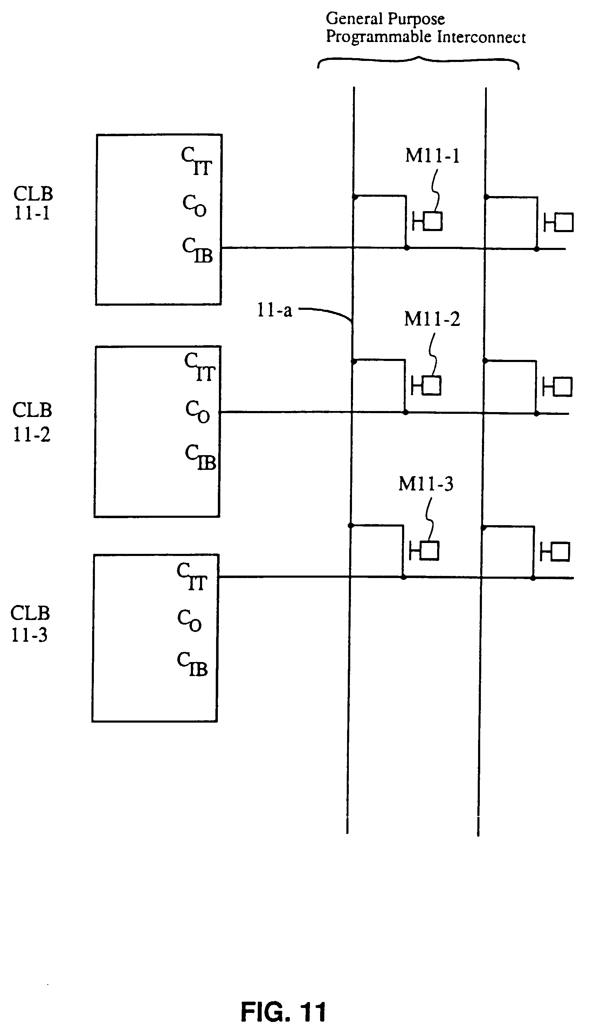

Fig. 11 is a schematic diagram showing an example of carry interconnect circuitry implemented with programmable interconnects.

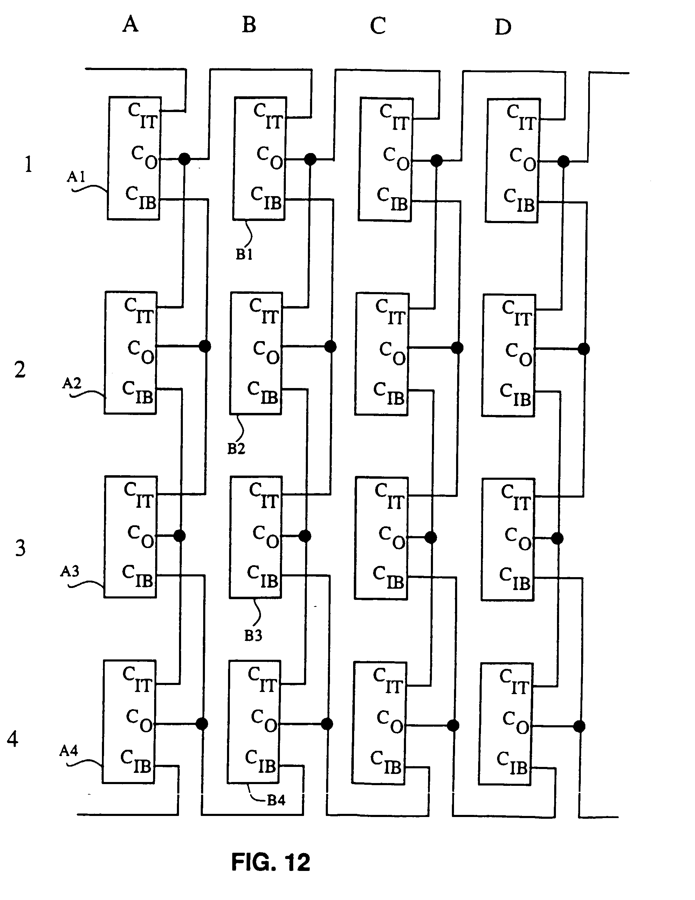

Fig. 12 is a schematic diagram showing one embodiment of dedicated carry logic interconnect circuitry.

The truth-table in Fig. 7 shows the logical relationships between two single bits that are being added, the carry-in bit, and the carry-out bit. A careful analysis of this truth table has revealed a useful pattern. When A and B are equal (lines 1,2, 7, and 8), the value of the carry-out $C_{out}$ bit is the value of A and of B. When A and B are not equal, on the other hand, (lines 3-6), the value of the carry-out $C_{out}$ bit is the value of the carry-in $C_{in}$ bit. Two equivalent Boolean logic equations can represent this pattern:

$$(10) \qquad C_{out} = (A \oplus B) \bullet (C_{in}) + (\overline{A \oplus B}) \bullet A$$

$$(11) \qquad C_{out} = (A \oplus B) \bullet (C_{in}) + (\overline{A \oplus B}) \bullet B$$

The circuit in Fig. 6 implements equation (10). Two conditions are satisfied by this circuit. When A and B are not equal, the signal on the carry-in terminal is passed to the carry-out terminal and when A and B are equal, the signal on A is passed to the carry-out terminal.

As shown in Fig. 6, the two single bits being added, A and B, are applied to the two input terminals of XOR gate 51. If A and B are equal, a low output signal from XOR gate 51 turns on pass transistor T1 and turns off pass transistor T2, allowing passage of the signal from A to the carry-out terminal $C_{out}$. If A and B are not equal, the output of XOR gate 51 is high, which turns on pass transistor T2 and turns off pass transistor T1. This in turn allows passage of the signal on the carry-in terminal $C_{in}$ to the carry-out terminal $C_{out}$.

Fig. 8 shows the first embodiment of the invention implemented in a full adder. It will now be shown by comparing Fig. 2 and Fig. 8 that the fast carry logic described above provides faster propagation of the carry signal than a conventional ripple carry adder. Fig. 8 shows one stage of a full adder circuit constructed according to the invention. The carry propagation is controlled as discussed above in connection with Fig. 6. As discussed above and shown in Fig. 2, the propagation delay of a conventional ripple carry adder is 1 AND gate plus 1 OR gate per pair of bits added plus 1 XOR gate. By contrast, as shown in Fig. 8, the worst-case delay of a circuit according to the invention occurs when one of the input signals, in this case $B_i$, is propagated to the carry out signal, that is, when the signal propagates through XOR gate 91 plus inverter 92 to turn on the pass-transistor 93. This happens simultaneously for all bits being added. The propagation delay for a carry signal to propagate through a long series of transistors such as transistor 94 adds only minimal time compared to a gate delay for generating the result of an addition. If four full-adder circuits such as shown in Fig. 8 are cascaded, in the worst case the output signal $C_{out}$ is available after an XOR gate delay plus an inverter delay plus the very small propagation delay through four pass transistors.

As shown in Fig. 9, two additional gate delays per two bits are added in a preferred embodiment by inverters I101 and I102 in order to maintain signal quality on a long line (approximately four gate delays for four bits). By contrast, the output signal $C_{out}$ of four cascaded conventional ripple carry full-adders, such as shown in Fig. 2, is not available until one XOR gate, four AND gates and four OR gates are passed (nine gate delays). Furthermore, whereas look-ahead carry circuits such as shown in Fig. 3 achieve faster carry propagation only through a much higher density of components, Applicant's invention requires no more components than a conventional ripple carry adder.

Fig. 9 shows a circuit in which the fast carry logic is incorporated in a circuit containing function generators, multiplexers, memory cells and extra logic gates which are used in configuring the circuit for multiple uses.

Input terminals F1 and F2 provide input signals $A_0$ and $B_0$, respectively. Function generator F, XNOR gate X101, memory cells CL0, CL1, multiplexer M2, and a third input terminal F3, work in conjunction to allow the same circuit to function selectively as an adder or as a subtractor. An embodiment in which a storage cell (not shown) receives an output signal $S_0$ from function generator F allows the circuit to function as an accumulator or counter as well. One input of the XNOR gate X101 is the output of M2, and the other input is the output of NOR gate N201. The two inputs to the NOR gate N201 are the complement of the signal on input terminal F2 and the complement of the value in CL7. For the circuit to function as a middle stage in a multi-bit adder, CL7 is set to input a low signal to NOR gate N201. This results in the output of NOR gate N201 being the signal on input terminal F2.

To control whether the circuit functions in the increment mode or the decrement mode, multiplexer M2 determines whether the signal provided by NOR gate N201 will or will not be inverted by XNOR gate X101. The value provided by M2 is provided by F3 or CL1 as controlled by CL0. CL1 is typically used to provide a static value while F3 provides a dynamically changing signal.

When M2 causes the circuit to function in the increment mode, the signal $B_0$ is propagated through XNOR gate X101 to XNOR gate X103. The truth-table of an XNOR gate shows that an input signal on one terminal of an XNOR gate is passed to the output of the XNOR gate when the signal on the other input terminal is high. Therefore, when the output of M2 is high, the carry-logic functions in the increment mode. When the output of M2 is low, however, signal $B_0$ is inverted by XNOR gate X101, and the carry logic of the circuit functions in the decrement mode. Further, if the control signal for selecting the increment/decrement mode originates on the F3 terminal, then this signal will also be applied to function generator F so that the sum logic implemented in function generator F will accordingly also function in either the increment or decrement mode.

First consider that the circuit is being used as an adder or incrementer and that multiplexer M2 is providing a high signal, so that the input $B_0$ is passed to the input of XNOR gate X103.

A second group of memory cells, CL2-CL5 and CL7, work together to allow the circuit of Fig. 9 to perform several functions. For the circuit to operate as a middle stage in a multi-bit adder, memory cells CL3, CL4 and CL5 are set high. Thus the combination X103 and I104 acts as an XOR gate, equivalent to XOR gate 91 in Fig. 8 so that the output of XNOR gate X103 will pass through inverter I104. Setting memory cell CL4 high places the signal from terminal F1 onto line 105. In this configuration the F-stage of Fig. 9 is equivalent to the carry circuit of Figs. 6 and 8. The signal from F1 is propagated to $C_i$ if transistor T102, equivalent to transistor 93 of Fig. 8, turns on in response to $A_0$ being equal to $B_0$. Setting memory cell CL5 high prevents the value in cell CL7 from simultaneously being propagated to line 105.

Setting CL3 low causes transistors T101 and T102 to be controlled by the signal in memory cell CL2. If CL2 is high, transistor T101 turns on, causing $C_{i-1}$ to be propagated to $C_i$. This configuration of memory cells CL2 and CL3 allows the carry signal $C_{i-1}$ to skip the carry logic of the F-stage. Skipping the carry logic of a particular stage in this way can be useful if layout constraints require a particular stage in a logic block to be used for something other than a stage in the adder (or counter, etc.).

If CL2 is set low (while CL3 is still low), T101 turns off and T102 turns on. When T102 is on, the signal on line 105 will be propagated to $C_i$. The signal on line 105 is controlled by memory cells CL4, CL5, and CL7, which together with inverters I105 and I106 make up 3:1 multiplexer M101. Multiplexer M101 controls which of 3 signals, the signal on terminal F1, the complement of the signal on terminal F3 ($\overline{F3}$), or the signal in memory cell CL7, will be placed on line 105. Note that the signal on F3 may be used by multiplexer M2 or by multiplexer M101.

As noted earlier, when the F-stage operates as a middle stage in a multi-bit adder, memory cells are programmed so that the signal on terminal F1 is placed on line 105. In addition CL3 is set high so that the value provided by XNOR gate X103, which is set to be a function of the $A_0$ and $B_0$ inputs on lines F1 and F2, will determine whether the carry-in signal $C_{i-1}$ or the value on F1 is propagated.

For the F-stage to add the least significant bit in a multi-bit adder, the carry-in can be preset to zero by applying a logic zero to one of Carry-In$_T$ or Carry-In$_B$ and setting memory cell MC to propagate the signal. (Generating this logic zero signal is discussed below in conjunction with Fig. 10.)

Alternatively, to preset the carry-in signal $C_i$ of the G-stage, any of the signal on $\overline{F3}$, the signal in CL7 or the signal on F1 can be used. The signal $\overline{F3}$ is selected to be placed on line 105 by setting CL5 high and CL4 low, and the signal in CL7 is selected by setting both CL4 and CL5 low. The F1 input terminal can also be used to preset the $C_i$ signal when the lowest order bit will be calculated in the G-stage. F1 can be used when the F1 input to the F function generator is not needed. To use F1 as the input for presetting $C_i$, high signals are stored in memory cells CL4 and CL5. Additionally, CL3 is set low and CL2 is set low, turning off transistor T101 and turning on transistor T102 so that the signal on line 105 will propagate to $C_i$.

In addition to functioning as a part of the 3:1 multiplexer M101, memory cell CL7 controls one input to NOR gates N201 and N202. For the F-stage to function as a middle stage in a multi-bit adder for adding values $A_0$ and $B_0$ on terminals F1 and F2, CL7 is set high so that the output of N201 is the signal on the input terminal F2. To add a constant to the input value $A_0$ on F1, CL7 is set low. This forces the input of N201 high, which forces the output of N201 low, and causes the addend to be selected by multiplexer M2. Memory cell CL0 can cause M2 to select between applying the value in CL1 and the value of F3 to XNOR gate X101 for generating an output to be added by X103 to $A_0$ on terminal F1. Thus, by programming CL7 low, a bit can be programmed to a constant value to be added to an input value without having to use the interconnect resources to which terminal F2 would be connected, which may be needed for carrying signals to other logic blocks (not shown).

Not all combinations of logic values in the memory cells of Fig. 9 are acceptable. For example, within M101, contention is possible if memory cell CL4 is high and memory cell CL5 is low, since both high and low signals could be simultaneously placed on line 105. To prevent such contention, software for programming the memory cells may be programmed to prevent this combination. Alternatively, an extra memory cell may be added to select only one of the two signals to be placed on line 105.

As discussed above, two stages, F-stage and G-stage, each representing one bit of a multi-bit adder, are cascaded together as in Fig. 9. In a preferred embodiment, a logic block will contain two such cascaded stages. Thus a single logic block can implement two bits in a multi-bit function that uses carry logic. This is a distinct improvement in the density of components required to implement functions that use carry logic. By contrast, as shown in Fig. 5, a multi-bit counter is realized in prior-art circuitry with a density of only one bit per logic block.

Regarding the G-stage of Fig. 9, a multiplexer M3 in the G-stage receives the carry-out signal of the F-stage, $C_i$, after it is buffered through two inverters I107 and I108. In an adder, carry-out signal $C_i$ will be combined in the G-function generator with the addends $A_1$ and $B_1$, present on terminals G4 and G1 respectively, to compute the sum bit $S_1$. Carry-out signal $C_i$ of the F-stage is also available to be propagated by transistor T103 to the carry-out $C_{i+1}$ of the G-stage, depending on the configuration conditions of the carry-logic of the G-stage.

Much of the carry-logic of the G-stage is identical to the carry-logic of the F-stage. For example, XNOR gate X102 of the G-stage functions analogously to XNOR gate X101 of the F-stage and is controlled by the output of the same multiplexer M2 to determine whether the G-stage will function as an adder or incrementer on the one hand, or a subtractor or decrementer on the other hand. Additionally, NOR gate N202 of the G-stage functions as NOR gate N201 of the F-stage, where one input is controlled by the memory cell CL7 to allow forcing the addend of the G stage to a constant value without having to use the interconnect resources coupled to the input terminals of the G-stage.

However, instead of memory cells CL2 and CL3 in the F-stage, the G-stage has only one memory cell CL6. CL6 functions similarly to CL3, controlling whether the G-stage functions as a mid-stage in a multi-bit adder or whether the carry signal will bypass the carry logic of the G-stage. When CL6 is high, transistor T105 turns on, and the G-stage functions as a middle stage in a multi-bit adder. When CL6 is low, thereby causing a low signal to be applied through transistor T106 to inverter I110, T103 is on (and T104 off). Turning on transistor T103 allows the carry signal at $C_i$ to bypass the carry logic of the G-stage. As with the F-stage, bypassing the G-stage, or any other particular stage in a logic block, might be required by a design layout which uses the G-stage for a different function.

Multiplexers M3 and M4 in the G-stage are connected and used differently from the multiplexers M1 and M2 of the F-stage. Multiplexer M2 of the F-stage controls whether the carry logic of the G-stage as well as the carry logic of the F-stage will function in an increment-mode or a decrement-mode. However, the G-stage does have its own multiplexer M4 which, in a preferred embodiment, controls whether the sum-logic in the function generator G will perform in the increment-mode or the decrement-mode. M4 is wired to control the sum logic in this way because one of its inputs, G3, is coupled to the same interconnect circuitry (not shown) as is the corresponding input F3 which controls the increment/decrement-mode of the F-function generator.

The other inputs of the multiplexers M3 and M4 of the G-stage are distributed so that signals needed simultaneously are not input into the same multiplexer. To operate as a middle stage in a multi-bit adder, the G-function generator needs both a signal controlling whether it operates in the increment or decrement mode, and a carry-out signal from the less significant bit. Thus, the increment/decrement mode signal applied to F3 is also applied through G3 to multiplexer M4 and the carry out signal from the less significant bit is routed to the multiplexer M3, making both signals available simultaneously to the G-function generator.

Further, in order to detect an overflow, as will be discussed below, the signals $C_i$ and $C_{i-1}$ must be compared and so must be available simultaneously. Thus the signal $C_i$ is input to multiplexer M3 and the signal $C_{i-1}$ is input to the other multiplexer M4, so that both can be available together to be input to the G-function generator.

The circuit of Fig. 9, comprising two stages cascaded together has the further ability to detect in the G-stage an overflow in processing the most significant bit, performed in a previous block. It is well known in the art to detect an overflow by recognizing that the carry of the sign bit is different from the carry of the most significant bit. Detecting an overflow condition can thus be accomplished by computing the XOR function of the carry of the sign bit and the carry of the most significant bit. In the circuit shown in Fig. 9, the carry of the most significant bit is presented at $C_{i-1}$, the carry-in to the F-stage, and the carry of the sign bit (which is a function of the $A_0$ and $B_0$ signals to the F-stage and the $C_{i-1}$ signal, is presented to $C_i$, the carry-out of the F-stage. $C_{i-1}$ is routed through I120 and I121 to the multiplexer M4 in the G-stage. $C_i$ is routed through I107 and I108 to the multiplexer M3 in the G-stage. To configure the circuit of Fig. 9 to detect an overflow, M3 is programmed to route $C_i$ to the G-function generator, and M4 is programmed to route $C_{i-1}$ to the G-function generator. The G function generator is programmed to compute the XOR function of $C_i$ and $C_{i-1}$ which, as discussed above, is an overflow detect signal.

The circuit of Fig. 9 can also function in the decrement mode. In the decrement mode, the circuit can decrement a counter or perform subtraction, including subtracting a constant from a variable.

Several modes for performing subtraction can be used with the circuit of Fig. 9. Three common modes for subtraction are two's complement, one's complement and sign-magnitude.

When the two's complement mode of subtraction is to be used, the carry-in bit of the least significant bit is preset to logic one. If the least significant bit is to be provided by the F-stage, the carry in of the least significant bit is preset through Carry $In_T$ or Carry $In_B$ and memory cell MC is set to propagate the signal to $C_{i-1}$. To apply a preset signal to Carry $In_B$ or Carry $In_T$ of the F-stage, the preset signal is generated in the F-stage of another logic block, and connected to the F-stage of the least significant bit, by a means to be discussed below, in connection with Figs. 10-12. The signal may be generated in the F-stage as discussed above and passed through the G-stage to the next logic block by turning on transistor T103 and turning off transistor T104. Thus the carry logic in the G-stage of that logic block used to generate a preset signal is bypassed.

Alternatively, if the least significant bit is to be provided by the G-stage in a two's complement subtraction, then transistor T101 is turned off and transistor T102 is turned on (by setting CL3 low and CL2 low) so that one of the three inputs of multiplexer M101 can be used to preset $C_i$ to logic one. Multiplexer M101 can provide the logic one through the F3 terminal by applying a low signal to F3, and setting CL5 high and CL4 low. Multiplexer M101 can provide the logic one as a stored value in memory cell CL7 by setting CL7 high, CL5 low, and CL4 low. Multiplexer M101 can provide the logic one through the F1 input terminal by applying a high signal on F1, and setting CL5 and CL4 high.

When performing one's complement subtraction or sign-magnitude subtraction, the carry-in of the least significant bit is usually preset to logic zero. In the case of one's complement subtraction the carry-out of the sign bit must be added to the least significant bit to generate the final answer. This may be accomplished by connecting the carry out terminal of the sign bit to the carry in terminal of the least significant bit rather than presetting the carry in of the least significant bit. Alternatively, the carry out of the sign bit is added to the generated sum. When the least significant bit is to be calculated in the F-stage, carry-in $C_{i-1}$ is preset to zero by applying a logic zero to Carry $In_T$ or Carry $In_B$ and setting memory cell MC to propagate the signal to $C_{i-1}$. When the least significant bit is to be calculated in the G-stage, carry-in $C_i$ is preset to zero through one of the three paths in multiplexer M101 as discussed above. For providing the logic zero through the F3 terminal, a high signal is applied to F3 (since it will be inverted). For providing the logic signal through CL7, the logic zero is loaded into CL7. For providing the logic zero through F1, a low signal is applied to F1.

For both two's complement and one's complement subtraction, the output of multiplexer M2 must be set low. For sign-magnitude subtraction, the output of M2 depends upon whether the signs of the two numbers to be subtracted are the same. For sign-magnitude subtraction, the output of M2 is set low if the two numbers are of the same sign. The output of M2 is set high if the two numbers are of opposite signs.

A further embodiment, a multi-bit adder, is described with reference to Fig. 10. Here an ordered array of blocks 1-4, each block comprising a circuit as shown in Fig. 9, is provided such that the carry-out, labeled $C_{i+1}$ in Fig. 9 and labeled Carry Out on each logic block in Fig. 10 is connected both to the carry-in of the logic block above, labeled Carry $In_B$ in both figures and the carry-in of the logic block below, labeled Carry $In_T$ in both figures. Further, each logic block can selectively receive a carry signal either from the logic block above (on terminal Carry-$In_T$) or the logic block below (on terminal Carry $In_B$). Whether a logic block receives a carry signal from the logic block above or the logic block below is controlled by memory cell MC. If MC is high, transistor T152 is on, and the carry signal from the logic block below is received on the Carry $In_B$ terminal. If MC is low, transistor T151 is on, and the carry signal from the logic block above is received on the Carry $In_T$ terminal. For example, line L112 connects the carry-out terminal of block 2 to the carry-in terminal Carry $In_B$ of block 1 and to the carry-in terminal Carry $In_T$ of block 3. Similarly, line L113 connects the carry-out terminal of block 4 to the carry-in terminal Carry $In_B$ of block 3 and the carry-in terminal Carry $In_T$ of block 5 (not shown). Thus, block 3 receives a carry signal on Carry $In_B$ from block 4 on L113 and on Carry $In_T$ from block 2 on L112. How memory cell MC is programmed will determine which of transistors T151 and T152 will be on, and thus which of the carry signals will be used by the internal circuitry of logic block 3.

The primary benefit of dedicated carry interconnect circuitry is that it performs much faster than does programmable carry interconnect circuitry. This increased performance is traded for the flexibility of the programmable interconnects. However, the dedicated interconnect circuitry shown in Fig. 10 is flexible in that the carry signals can be propagated in either of two directions through the array.

Fig. 11 shows an interconnect structure which does not use dedicated interconnect circuitry for propagating signals in a choice of directions through an array. Figure 11 shows only a partial set of memory cells and interconnects which would be needed in the interconnect structure for interconnecting logic blocks to form a multi-bit adder or other multi-bit function that uses carry logic. According to Figure 11, output $C_0$ of logic block 11-2 can be connected to either logic block 11-1 or logic block 11-3 by turning on a corresponding transistor controlled by memory cell M11-2 which connects the output of logic block 11-2 to interconnect line 11-a. If it is desired to connect output $C_0$ of logic block 11-2 to input $C_{IB}$ of logic block 11-1, memory cell M11-1 is programmed to turn on its corresponding transistor so that the signal on line 11-a will propagate to terminal $C_{IB}$ of block 11-1. If it is desired to connect output $C_0$ to logic block 11-3, memory cell M11-3 is turned on to connect interconnect line 11-a to input $C_{IT}$ of logic block 11-3. Other memory cells (not shown) can likewise be programmed to control the direction of signal propagation from one logic block to the next. It is easy to see that a large number of memory cells is needed in order to provide flexibility in controlling the propagation direction of the carry signal through the stages of a multi-bit adder.

Another embodiment shown in Fig. 12 exhibits more sophisticated dedicated carry interconnect circuitry. This dedicated interconnect circuitry allows a carry chain to be built in a serpentine fashion of arbitrary length. Some of the blocks are configured as in Fig. 10, that is, such that the carry-out signal is propagated to both the logic block above and the logic block below. However, at the top and bottom edges of the array, the circuits are configured differently. At the top edge, the carry-out signal of a logic block is propagated to the carry-in of the logic block below, and to the carry-in of the logic block to the right. Further, each top logic block receives a carry-in signal from the logic block below and from the logic block to the left. Each circuit on the bottom is configured such that the carry-out signal of a logic block is propagated to the carry-in of the logic block above, and to the carry-in of the logic block to the right. Further, each bottom circuit receives a carry-in signal from the logic block above and from the logic block to the left. Memory cell MC of each logic block controls which carry-in signal of the two available carry-in signals will be received by the logic block as discussed in connection with Fig. 10.

The sophisticated dedicated interconnect circuitry shown in Fig. 12 is especially useful in providing increased flexibility in design layouts. Multi-bit adders or counters, or other multi-bit arithmetic functions, need not be restricted to a particular column of logic blocks. For example, an eight-bit counter can be implemented in the horseshoe configuration consisting of logic blocks B3, B4, A4, and A3, where A3 will contain the least significant bit and the next more significant bit, A4 ine next two more significant bits, B4 the next, and finally, B3 the two most significant bits. The memory cells MC of each block will be programmed such that the carry signal will propagate from $C_0$ of logic block A3 to $C_{IT}$ of logic block A4, then from $C_0$ of logic block A4 to $C_{IB}$ of logic block B4, and finally from $C_0$ of logic block B4 to $C_{IB}$ of logic block B3. Since the internal circuitry of the logic blocks (as shown in Fig. 9) allows the carry logic of any particular bit(s) to be bypassed, the eight-bit counter (or other function using carry logic) need not be realized in adjacent blocks. So, for example, the least significant bits could be in logic block A2 instead of A3, with the other six bits being in A4, B4, B3 as in the previous example. By appropriately programming the memory cells CL2, and CL3 and CL6 in block A3, the carry signal $C_0$ of logic block A2 will bypass the carry logic of logic block A3, and propagate to $C_{IT}$ of logic block A4.

Many other embodiments of the present invention incorporating the features taught here will become obvious to those skilled in the art in light of the above disclosure. For example, regarding the dedicated interconnect of the carry logic between logic blocks, although Fig. 12 shows interconnecting logic blocks in a serpentine structure and Figs. 10 and 12 show two adjacent logic blocks providing input to the carry logic of a particular logic block, it is possible for more than two logic blocks to provide input to the carry logic of a particular logic block and it is possible to interconnect logic blocks which are not contiguous. Further, although Fig. 9 shows a logic block having two stages of carry logic and two function generators, it is possible to form logic blocks having one stage or having more than two stages. An embodiment in which one logic block has four stages, and in which inverters for buffering the carry signal are provided only once for the four stages, offers a speed improvement over the embodiment of Fig. 9, and may be preferred for certain design specifications.

For another example, although the control circuitry of Fig. 9 is described as controlled by memory cells, it is obvious that these memory cells can be SRAM memory cells, EPROMS, EEPROMS, fuses, or antifuses. It is also obvious that control signals can be provided by output signals of logic gates and other available signals. These embodiments and others which become obvious in light of the above disclosure are intended to fall within the scope of the present invention.

**Claims**

1.  A programmable logic device comprising an array of configurable logic blocks, each configurable logic block having at least one circuit comprising:

    a first input terminal (A) and a second input terminal (B);
    a carry-in terminal (Ci-1) and a carry-out terminal (Ci);
    first switching means (T102) for connecting the first input terminal (A) to the carry-out terminal (Ci);
    second switching means (T101) for connecting the carry-in terminal (Ci-1) to the carry-out terminal (Ci);
    control means (N201, X101, X103, I104) for causing the first switching means (T102) to connect the first input terminal (A) to the carry-out terminal (Ci) when and only when a logic value of a signal on the first input terminal (A) is equal to a logic value of a signal on the second input terminal (B), and for causing the second switching means (T101) to connect the carry-in terminal (Ci-1) to the carry-out terminal (Ci) when and only when the logic value of a signal on the first input terminal (A) does not equal the logic value of a signal on the second input terminal (B); and
    means (T200, T201, T203) for disconnecting the first input terminal (A) from the carry-out terminal (Ci) in a manner independent of the states of the signals on the first and second input terminals, and storage means (CL7) for storing a stored value and means (CL5, T202) for selectively switching the stored value in the storage means to the carry-out terminal (Ci) when the carry-out terminal is disconnected, by said means for disconnecting.

2.  A logic device as claimed in Claim 1, wherein each logic block has:
    a third input terminal (F3) and means for selectively applying the signal on the third input terminal to the carry-out terminal (Ci).

3.  A logic device as claimed in Claim 1, wherein each logic block comprises means for inverting or not inverting a signal to generate an operand, and means for applying the operand to the second input terminal (B).

4.  A logic device as claimed in Claim 1, wherein each logic block comprises:

    an XNOR gate (X103);
    a first (1104) and a second inverter;
    third and fourth controllable switching means ; and
    a first (CL2) and a second (CL3) memory cell, each memory cell having an output and an output-complement;
    wherein the first (A) and the second (B) input terminals are inputs to the XNOR gate (X103), an output of the XNOR gate (X103) is input to the first inverter (1104) by the third switching means,
    the output of the first inverter (1104) is input to the second inverter,
    the output-complement of the first memory cell (CL2) is input to the first inverter (1104) by the fourth switching means,
    the first switching means (T102) is controlled by the output signal of the second inverter,
    the second switching means (T101) is controlled by the output signal of the first inverter (I104),
    the third switching means is controlled by the output of the second memory cell (CL3), and
    the fourth switching means is controlled by said output-complement of the second memory cell (CL3).

5.  A logic device as claimed in Claim 4, wherein the memory cells (CL2, CL3) are static random access memory cells, electrically programmable switches, electrically erasable electrically programmable switches. fuses, or antifuses.

**6.** A logic device as claimed in Claim 2, wherein each logic block has a three-way multiplexer (M) for selecting between causing the first switching means (T102) to connect the first input terminal (A) to the carry-out terminal (Ci), causing the first switching means (T102) to connect the third input terminal to the carry-out terminal (Ci), and causing the first switching means (T102) to apply a stored value to the carry-out terminal (Ci).

**7.** A logic device as claimed in Claim 1, wherein each logic block has:

a third input signal (F3);
means for providing a stored value;
third (T201) fourth (T200), fifth (T203), and sixth (T202) controllable switching means; and
means for controlling the third, fourth, fifth and sixth controllable switching means such that:
the third input terminal (F3) is coupled to the carry-out terminal (Ci) only when the first (T102), third (201), and fifth (T203) switching means are conductive;
the stored value is coupled to the carry-out terminal (Ci) only when the sixth (T202) and the first switching means (T102) are conductive; and
the first input terminal (A) is coupled to the carry-out terminal (Ci) only when the fourth and first (T102) switching means are conductive.

**8.** A logic device as claimed in Claim 1, wherein the control means comprises:

an XNOR gate having two input terminals coupled respectively to the first (A) and second (B) input signal terminals, and an output terminal;
a first inverter (I104), the output of the first inverter controlling the second switching means (T101);
means for providing a stored value;
third switching means (CL3), wherein the third switching means selects between providing the stored value and a signal output from the XNOR gate to the input terminal of the first inverter; and
a second inverter connected to the output terminal of the first inverter, the output terminal of the second inverter controlling the first switching means (T102).

**9.** A logic device as claimed in Claim 1, wherein each logic block has:

an XNOR gate (X101);
a first memory cell (CLO) and second memory cell (CL1);
a multiplexer (M2) with at least two inputs and one output;
a third input terminal (F3);
wherein the output of the first memory cell is an input of the multiplexer (M2);
the third input terminal (F3) is an input of the multiplexer (M2);
the output of the second memory cell selects between connecting the first memory cell and connecting the third input terminal to the output terminal of the multiplexer (M2);
the output of the multiplexer is an input of the XNOR gate (X101); the second input terminal (B) is coupled to an input of the XNOR gate (X101); and
the XNOR gate and the first input terminal control the means for causing.

**10.** A logic device as claimed in Claim 1, wherein each logic block has at least:

a first circuit and a second circuit, the carry-out terminal of the first circuit being connected to the carry-in terminal of the second circuit, the carry-out terminal of the second circuit being coupled to a carry-out terminal of the logic block;
at least one logic block carry-in terminal; and
means for using a signal on the logic block carry-in terminal or on one of the logic block carry-in terminals as a carry-in signal on the carry-in terminal of the first circuit.

**11.** A logic device as claimed in Claim 10. wherein the second circuit comprises means for comparing a signal on the carry-out terminal of the first circuit with the carry-in signal on the first circuit, the means being adapted to detect an overflow condition.

**12.** A logic device as claimed in Claim 11, wherein the means for comparing comprises:

a first multiplexer for selecting between the carry-in signal of the first circuit and a first input signal to the second circuit;
a second multiplexer for selecting between the carry-out signal of the first circuit and a second input signal to the second circuit;
means for controlling the first and second multiplexers; and
means for generating the XOR function of signals provided by the first and second multiplexers.

**13.** A logic device as claimed in Claim 12, wherein the means for generating the XOR function of signals provided by the multiplexers comprises a combinatorial function generator.

**14.** A logic device as claimed in Claim 13, wherein the means for generating comprises a logic function generator with at least two inputs, wherein each of the input terminals is a separate input to the function generator.

**15.** A logic device as claimed in claim 1, wherein each logic block comprises:

means for receiving a first input signal and placing the first input signal on said first input terminal;
means for receiving a second input signal;
means for selecting between placing the second input signal, the complement of the second input signal, and a constant value on the second input terminal.

**16.** A logic device as claimed in Claim 15, wherein the means for selecting comprises:

means for replacing the second input signal with a first constant value;
means for controlling whether the second input signal will be replaced with the first constant value; and
means for selecting whether the first constant value will be inverted.

**17.** A logic device as claimed in any preceding claim wherein each logic block has a carry-in terminal and a carry-out terminal, and the carry-out terminal of each logic block is coupled to at least one carry-in terminal of a logic block preceding the logic block and to the carry-in terminal of a logic block following the logic block.

**18.** A logic device as claimed in Claim 17, wherein the logic blocks are positioned in a rectangular array of horizontal rows and vertical columns and wherein the logic block preceding each logic block and the logic block following it are positioned in the same column or in the same row as said each logic block.

**19.** A logic device as claimed in Claim 17 or 18, wherein the logic block preceding each logic block and the logic block following it are contiguous to said each logic block.

**20.** A logic device as claimed in Claim 1, wherein each logic block comprises at least a first stage (F stage) and a second stage (G stage), and wherein each stage comprises:

at least a first input terminal and a second input terminal;
a carry-in terminal;
a carry-out terminal;

dedicated circuitry for performing carry logic with at least three inputs and at least one output;
wherein the three inputs or three of the at least three inputs comprise:
a signal on the first input terminal;
a signal on the second input terminal; and
a signal on the carry-in terminal,
wherein the output is a carry function of the three inputs.

**21.** A logic device as claimed in Claim 20, wherein the carry-out terminal of the first stage is connected directly to the carry-in terminal of the second stage, and the carry-out terminal of one of the logic blocks is connected through buffering means to the carry-in terminal of another one of the logic blocks.

**22.** A logic device as claimed in Claim 21, wherein each logic block comprises second means for computing the carry function of the signal on the first input terminal, the signal on the carry-in terminal, and a complement of the signal on the second input terminal, and means for selecting between using the first means and using said second means.

**23.** A logic device as claimed in Claim 1, comprising dedicated interconnect lines for interconnecting the hardware for performing the carry function in a first logic block to hardware for performing the carry function in at least a second logic block.

**24.** A logic device as claimed in Claim 23, wherein the dedicated interconnect lines comprise lines for interconnecting the hardware for performing the carry function in a first logic block to hardware for performing the carry function in at least a third logic block.

**25.** A logic device as claimed in Claim 24, comprising programmable interconnect lines, wherein the hardware for performing the carry function comprises:

means for selecting the carry-in signal of the third logic block from among at least carry-out signals on the carry-out terminals of the first and second logic blocks.

**26.** A logic device as claimed in Claim 24 or 25, wherein the logic blocks are located in rows and columns within the integrated circuit structure, and the third logic block is positioned contiguous with the first and second logic blocks.

**27.** A logic device as claimed in Claim 26, wherein the first logic block is positioned in the same row as the third logic block and the second logic block is positioned in the same column as the third logic block.

**28.** A logic device as claimed in Claim 24 or 25, wherein the logic blocks are positioned in rows and columns and the first and second logic blocks are located in the same row or same columns as the third logic block.

**Patentansprüche**

**1.** Programmierbare Logikanordnung, umfassend eine Matrix aus konfigurierbaren Logikblöcken, wobei jeder konfigurierbare Logikblock wenigstens eine Schaltung aufweist, umfassend:

einen ersten Eingangsanschluss (A) und einen zweiten Eingangsanschluss (B);
einen Eintragsanschluss (Ci-1) und einen Austragsanschluss (Ci);
ein erstes Schaltmittel (T102) zum Verbinden des ersten Eingangsanschlusses (A) mit dem Austragsanschluss (Ci);
ein zweites Schaltmittel (T101) zum Verbinden des Eintragsanschlusses (Ci-1) mit dem Austragsanschluss (Ci);
Steuermittel (N201, X101, X103, 1104), um zu bewirken, dass das erste Schaltmittel (T102) den ersten Eingangsanschluss (A) mit dem Austragsanschluss (Ci) verbindet, wenn - und nur dann - ein Logikwert eines Signals am ersten Eingangsanschluss (A) gleich einem Logikwert eines Signals am zweiten Eingangsanschluss (B) ist, und um zu bewirken, dass das zweite Schaltmittel (T101) den Eintragsanschluss (Ci-1) mit dem Austragsanschluss (Ci) verbindet, wenn - und nur dann - der Logikwert eines Signals am ersten Eingangsanschluss (A) nicht gleich dem Logikwert eines Signals am zweiten Eingangsanschluss (B) ist; und Mittel (T200, T201, T203) zum Trennen des ersten Eingangsanschlusses (A) vom Austragsanschluss (Ci) auf eine Weise, die von den Zuständen der Signale am ersten und am zweiten Eingangsanschluss unabhängig ist, und ein Speichermittel (CL7) zum Speichern eines gespeicherten Wertes, und Mittel (CL5, T202) zum selektiven Schalten des gespeicherten Wertes im Speichermittel auf den Austragsanschluss (Ci), wenn der Austragsanschluss von dem genannten Trennmittel getrennt wird.

**2.** Logikanordnung nach Anspruch 1, wobei jeder Logikblock einen dritten Eingangsanschluss (F3) und ein Mittel zum selektiven Anlegen des Signals am dritten Eingangsanschluss an den Austragsanschluss (Ci) hat.

**3.** Logikanordnung nach Anspruch 1, bei der jeder Logikblock ein Mittel zum Invertieren oder Nichtinvertieren eines Signals zum Erzeugen eines Operanden sowie ein Mittel zum Anwenden des Operanden auf den zweiten Eingangsanschluss (B) aufweist.

**4.** Logikanordnung nach Anspruch 1, bei der jeder Logikblock folgendes umfasst:

ein XNOR-Gate (X103);
einen ersten (1104) und einen zweiten Inverter;
ein drittes und ein viertes steuerbares Schaltmittel; und
eine erste (CL2) und eine zweite (CL3) Speicherzelle, wobei jede Speicherzelle einen Ausgang und ein Ausgangskomplement hat;
wobei der erste (A) und der zweite (B) Eingangsanschluss Eingänge zum XNOR-Gate (X103) sind,
ein Ausgang des XNOR-Gates (X103) von dem dritten Schaltmittel in den ersten Inverter (1104) eingegeben wird,
der Ausgang des ersten Inverters (1104) in den zweiten Inverter eingegeben wird,
das Ausgangskomplement der ersten Speicherzelle (CL2) mit dem vierten Schaltmittel in den ersten Inverter (1104) eingegeben wird,
das erste Schaltmittel (T102) vom Ausgangssignal des zweiten Inverters gesteuert wird,
das zweite Schaltmittel (T101) vom Ausgangssignal des ersten Inverters (1104) gesteuert wird,
das dritte Schaltmittel vom Ausgang der zweiten Speicherzelle (CL3) gesteuert wird, und
das vierte Schaltmittel von dem genannten Ausgangskomplement der zweiten Speicherzelle (CL3) gesteuert wird.

**5.** Logikanordnung nach Anspruch 4, bei der die Speicherzellen (CL2, CL3) statische Direktzugriffsspeicherzellen, elektrisch programmierbare Schalter, elektrisch löschbare, elektrisch programmierbare Schalter, Sicherungen oder Trennungssicherungen sind.

**6.** Logikanordnung nach Anspruch 2, bei der jeder Logikblock einen Dreiweg-Multiplexer (M) aufweist, um auszuwählen, ob das erste Schaltmittel (T102) den ersten Eingangsanschluss (A) mit dem Austragsanschluss (Ci) verbinden soll, ob das erste Schaltmittel (T102) den dritten Eingangsanschluss mit dem Austragsanschluss (Ci) verbinden soll oder ob das erste Schaltmittel (T102) einen gespeicherten Wert an den Austragsanschluss (Ci) anlegen soll.

**7.** Logikanordnung nach Anspruch 1, bei der jeder Logikblock folgendes aufweist:

ein drittes Eingangssignal (F3);

ein Mittel zum Bereitstellen eines gespeicherten Wertes;

ein drittes (T201), viertes (T200), fünftes (T203) und sechstes (T202) steuerbares Schaltmittel; und

ein Mittel zum Steuern des dritten, vierten, fünften und sechsten steuerbaren Schaltmittels auf eine solche Weise, dass:

der dritte Eingangsanschluss (F3) mit dem Austragsanschluss (Ci) nur dann gekoppelt ist, wenn das erste (T102), dritte (201) und fünfte (T203) Schaltmittel leitend sind;

der gespeicherte Wert mit dem Austragsanschluss (Ci) nur dann gekoppelt ist, wenn das sechste (T202) und das erste Schaltmittel (T102) leitend sind; und

der erste Eingangsanschluss (A) mit dem Austragsanschluss (Ci) nur dann gekoppelt ist, wenn das vierte und das erste (T102) Schaltmittel leitend sind.

8.  Logikanordnung nach Anspruch 1, bei der das Steuermittel folgendes umfasst:

ein XNOR-Gate mit zwei Eingangsanschlüssen, die jeweils mit dem ersten (A) und dem zweiten (B) Eingangssignalanschluss gekoppelt sind, und einem Ausgangsanschluss;

einen ersten Inverter (1104), dessen Ausgang das zweite Schaltmittel (T101) steuert;

ein Mittel zum Bereitstellen eines gespeicherten Wertes;

ein drittes Schaltmittel (CL3), das zwischen dem Bereitstellen des gespeicherten Wertes und einem Signalausgang vom XNOR-Gate zum Eingangsanschluss des ersten Inverters auswählt; und

einen zweiten Inverter, der mit dem Ausgangsanschluss des ersten Inverters verbunden ist, wobei der Ausgangsanschluss des zweiten Inverters das erste Schaltmittel (T102) steuert.

9.  Logikanordnung nach Anspruch 1, bei der jeder Logikblock folgendes aufweist:

ein XNOR-Gate (X101);

eine erste Speicherzelle (CLO) und eine zweite Speicherzelle (CL1);

einen Multiplexer (M2) mit wenigstens zwei Eingängen und einem Ausgang;

einen dritten Eingangsanschluss (F3);

wobei der Ausgang der ersten Speicherzelle ein Eingang des Multiplexers (M2) ist;

der dritte Eingangsanschluss (F3) ein Eingang des Multiplexers (M2) ist;

der Ausgang der zweiten Speicherzelle zwischen dem Verbinden der ersten Speicherzelle und dem Verbinden des dritten Eingangsanschlusses mit dem Ausgangsanschluss des Multiplexers (M2) auswählt;

der Ausgang des Multiplexers ein Eingang des XNOR-Gates (X101) ist;

der zweite Eingangsanschluss (B) mit einem Eingang des XNOR-Gates (X101) gekoppelt ist; und

das XNOR-Gate und der erste Eingangsanschluss das Bewirkungsmittel steuert.

10. Logikanordnung nach Anspruch 1, bei der jeder Logikblock wenigstens folgendes aufweist:

eine erste Schaltung und eine zweite Schaltung, wobei der Austragsanschluss der ersten Schaltung mit dem Eintragsanschluss der zweiten Schaltung verbunden ist, wobei der Austragsanschluss der zweiten Schaltung mit einem Austragsanschluss des Logikblockes gekoppelt ist;

wenigstens einen Logikblock-Eintragsanschluss; und

ein Mittel zum Verwenden eines Signals an dem Logikblock-Eintragsanschluss oder an einem der Logikblock-Eintragsanschlüsse als Eintragssignal am Eintragsanschluss der ersten Schaltung.

11. Logikanordnung nach Anspruch 10, bei der die zweite Schaltung ein Mittel zum Vergleichen eines Signals am Austragsanschluss der ersten Schaltung mit dem Eintragssignal an der ersten Schaltung umfasst, wobei das Mittel die Aufgabe hat, einen Überlaufzustand zu erfassen.

12. Logikanordnung nach Anspruch 11, bei der das Vergleichsmittel folgendes umfasst:

einen ersten Multiplexer zum Wählen zwischen dem Eintragssignal der ersten Schaltung und einem ersten Eingangssignal zur zweiten Schaltung;

einen zweiten Multiplexer zum Auswählen zwischen dem Austragssignal der ersten Schaltung und einem zweiten Eingangssignal zur zweiten Schaltung;

ein Mittel zum Steuern des ersten und des zweiten Multiplexers; und

ein Mittel zum Erzeugen der XOR-Funktion von Signalen, die vom ersten und vom zweiten Multiplexer erzeugt werden.

13. Logikanordnung nach Anspruch 12, bei der das Mittel zum Erzeugen der XOR-Funktion von Signalen, die von den Multiplexern erzeugt werden, einen Kombinationsfunktionsgenerator umfasst.

**14.** Logikanordnung nach Anspruch 13, bei der das Erzeugungsmittel einen Logikfunktionsgenerator mit wenigstens zwei Eingängen umfasst, wobei jeder der Eingangsanschlüsse ein separater Eingang zu dem Funktionsgenerator ist.

**15.** Logikanordnung nach Anspruch 1, bei der jeder Logikblock folgendes umfasst:

ein Mittel zum Empfangen eines ersten Eingangssignals und zum Anlegen des ersten Eingangssignals an den genannten ersten Eingangsanschluss;
ein Mittel zum Empfangen eines zweiten Eingangssignals;
ein Mittel zum Wählen zwischen dem Anlegen des zweiten Eingangssignals, des Komplements des zweiten Eingangssignals und eines konstanten Wertes an den zweiten Eingangsanschluss.

**16.** Logikanordnung nach Anspruch 15, bei der das Auswahlmittel folgendes umfasst:

ein Mittel zum Ersetzen des zweiten Eingangssignals durch einen ersten konstanten Wert;
ein Mittel zum Steuern, ob das zweite Eingangssignal durch den ersten konstanten Wert ersetzt wird; und
ein Mittel zum Auswählen, ob der erste konstante Wert invertiert wird.

**17.** Logikanordnung nach einem der vorherigen Ansprüche, bei der jeder Logikblock einen Eintragsanschluss und einen Austragsanschluss aufweist und bei der der Austragsanschluss jedes Logikblockes mit wenigstens einem Eintragsanschluss eines dem Logikblock vorangehenden Logikblocks und dem Eintragsanschluss eines dem Logikblock folgenden Logikblocks gekoppelt ist.

**18.** Logikanordnung nach Anspruch 17, bei der die Logikblöcke in einer rechteckigen Matrix von horizontalen Reihen und senkrechten Spalten angeordnet sind und wobei der jedem Logikblock vorangehende Logikblock und der ihm folgende Logikblock sich in derselben Spalte oder in derselben Reihe befinden wie jeder genannte Logikblock.

**19.** Logikanordnung nach Anspruch 17 oder 18, bei der der jedem Logikblock vorangehende Logikblock und der ihm folgende Logikblock mit dem genannten jeden Logikblock zusammenhängend sind.

**20.** Logikanordnung nach Anspruch 1, bei der jeder Logikblock wenigstens eine erste Stufe (F-Stufe) und eine zweite Stufe (G-Stufe) umfasst, und wobei jede Stufe folgendes umfasst:

wenigstens einen ersten Eingangsanschluss und einen zweiten Eingangsanschluss;
einen Eintragsanschluss;
einen Austragsanschluss;
eine dedizierte Schaltungsanordnung zur Durchführung von Übertragslogik mit wenigstens drei Eingängen und wenigstens einem Ausgang;
wobei die drei Eingänge oder drei der wenigstens drei Eingänge folgendes umfassen:
ein Signal am ersten Eingangsanschluss;
ein Signal am zweiten Eingangsanschluss; und
ein Signal am Eintragsanschluss,
wobei der Ausgang eine Übertragsfunktion der drei Eingänge ist.

**21.** Logikanordnung nach Anspruch 20, bei der der Austragsanschluss der ersten Stufe direkt mit dem Eintragsanschluss der zweiten Stufe verbunden ist, und der Austragsanschluss eines der Logikblöcke durch Puffermittel mit dem Eintragsanschluss eines anderen der Logikblöcke verbunden ist.

**22.** Logikanordnung nach Anspruch 21, bei der jeder Logikblock ein zweites Mittel zum Errechnen der Übertragsfunktion des Signals am ersten Eingangsanschluss, des Signals am Eintragsanschluss und eines Komplements des Signals am zweiten Eingangsanschluss sowie ein Mittel zum Auswählen zwischen der Verwendung des ersten Mittels und der Verwendung des zweiten Mittels umfasst.

**23.** Logikanordnung nach Anspruch 1, umfassend dedizierte Verbindungsleitungen zum Verbinden der Hardware zur Durchführung der Übertragsfunktion in einem ersten Logikblock mit Hardware zur Durchführung der Übertragsfunktion in wenigstens einem zweiten Logikblock.

**24.** Logikanordnung nach Anspruch 23, bei der die dedizierten Verbindungsleitungen Leitungen zum Verbinden der Hardware zum Durchführen der Übertragsfunktion in einem ersten Logikblock mit Hardware zur Durchführung der Übertragsfunktion in wenigstens einem dritten Logikblock umfassen.

**25.** Logikanordnung nach Anspruch 24, umfassend programmierbare Verbindungsleitungen, wobei die Hardware zur Durchführung der Übertragsfunktion folgendes umfasst:

Mittel zum Auswählen des Eintragssignals des dritten Logikblockes aus wenigstens Austragssignalen an den Austragsanschlüssen des ersten und des zweiten Logikblocks.

**26.** Logikanordnung nach Anspruch 24 oder 25, bei der sich die Logikblöcke in Reihen und Spalten in der integrierten Schaltungsstruktur befinden und der dritte Logikblock mit dem ersten und dem zweiten Logikblock zusammenhängend positioniert ist.

27. Logikanordnung nach Anspruch 26, bei der sich der erste Logikblock in derselben Reihe befindet wie der dritte Logikblock und der zweite Logikblock sich in derselben Spalte befindet wie der dritte Logikblock.

28. Logikanordnung nach Anspruch 24 oder 25, bei der die Logikblöcke in Reihen und Spalten angeordnet sind und der erste und der zweite Logikblock sich in derselben Reihe oder derselben Spalte befinden wie der dritte Logikblock.

## Revendications

1. Dispositif logique programmable comprenant une matrice de blocs logiques configurables, chaque bloc logique configurable ayant au moins un circuit comprenant :

un premier terminal d'entrée (A) et un deuxième terminal d'entrée (B);
un terminal de retenue entrante (Ci-1) et un terminal de retenue sortante (Ci);
un premier moyen de commutation (T102) pour connecter le premier terminal d'entrée (A) au terminal de retenue sortante (Ci);
un deuxième moyen de commutation (T101) pour connecter le terminal de retenue entrante (Ci-1) au terminal de retenue sortante (Ci);
un moyen de contrôle (N201, X101, X103, I104) pour faire que le premier moyen de commutation (T102) connecte le premier terminal d'entrée (A) au terminal de retenue sortante (Ci) lorsque et seulement lorsqu'une valeur logique d'un signal sur le premier terminal d'entrée (A) est égale à une valeur logique d'un signal sur le deuxième terminal d'entrée (B), et pour faire que le deuxième moyen de commutation (T101) connecte le terminal de retenue entrante (Ci-1) au terminal de retenue sortante (Ci) lorsque et seulement lorsque la valeur logique d'un signal sur le premier terminal d'entrée (A) n'est pas égale à la valeur logique d'un signal sur le deuxième terminal d'entrée (B); et
un moyen (T200, T201, T203) pour déconnecter le premier terminal d'entrée (A) du terminal de retenue sortante (Ci) d'une manière indépendante des états des signaux sur le premier et le deuxième terminaux d'entrée, et un moyen de stockage (CL7) pour stocker une valeur mémorisée et des moyens (CL5, T202) pour commuter sélectivement la valeur mémorisée dans le moyen de stockage au terminal de retenue sortante (Ci) lorsque le terminal de retenue sortante est déconnecté, par ledit moyen de déconnexion.

2. Dispositif logique tel que revendiqué dans la revendication 1, dans lequel chaque bloc logique a :
un troisième terminal d'entrée (F3) et un moyen pour appliquer sélectivement le signal sur le troisième terminal d'entrée au terminal de retenue sortante (Ci).

3. Dispositif logique tel que revendiqué dans la revendication 1, dans lequel chaque bloc logique comprend un moyen pour inverser ou ne pas inverser un signal pour générer un opérande, et un moyen pour appliquer l'opérande au deuxième terminal d'entrée (B).

4. Dispositif logique tel que revendiqué dans la revendication 1, dans lequel chaque bloc logique comprend :

une porte NON-OU exclusif (X103);
un premier (I104) et un deuxième inverseur;
un troisème et un quatrième moyens de commutation contrôlables; et
une première (CL2) et une deuxième (CL3) cellules de mémoire, chaque cellule de mémoire ayant une sortie et un complément de sortie dans lequel les premier (A) et deuxième (B) terminaux d'entrée sont des entrées vers la porte NON-OU exclusif (X103),
une sortie de la porte NON-OU exclusif (X103) est une entrée vers le premier inverseur (I104) par le troisième moyen de commutation,
la sortie du premier inverseur (I104) est une entrée vers le deuxième inverseur,
le complément de sortie de la première cellule de mémoire (CL2) est une entrée vers le premier inverseur (I104) par le quatrième moyen de commutation,
le premier moyen de commutation (T102) est contrôlé par le signal de sortie du deuxième inverseur,
le deuxième moyen de commutation (T101) est contrôlé par le signal de sortie du premier inverseur (I104),
le troisième moyen de commutation est contrôlé par la sortie de la deuxième cellule de mémoire (CL3); et
le quatrième moyen de commutation est contrôlé par ledit complément de sortie de la deuxième cellule de mémoire (CL3).

5. Dispositif logique tel que revendiqué dans la revendication 4, dans lequel les cellules de mémoire (CL2, CL3) sont des cellules de mémoire statique à accès sélectif, des commutateurs électriquement programmables, des commutateurs électriquement programmables électriquement effaçables, des fusibles, ou des anti-fusibles.

6. Dispositif logique tel que revendiqué dans la revendication 2, dans lequel chaque bloc logique a un multiplexeur trois voies (M) pour sélectionner entre faire que le premier moyen de commutation (T102) connecte le premier terminal d'entrée (A) au terminal de retenue sortante (Ci), faire que le premier moyen de commutation (T102) connecte le troisième terminal d'entrée au terminal de retenue sortante (Ci), et faire que le premier moyen de commutation (T102) applique une valeur mémorisée au terminal de retenue sortante (Ci).

7. Dispositif logique tel que revendiqué dans la revendication 1, dans lequel chaque bloc logique a :

un troisième signal d'entrée (F3) ;
un moyen pour fournir une valeur mémorisée;
des troisième (T201) quatrième (T200), cinquième (T203), et sixième (T202) moyens de commutation contrôlables; et
des moyens pour contrôler les troisième, quatrième, cinquième et sixième moyens de commutation contrôlables de sorte que :
le troisième terminal d'entrée (F3) n'est couplé au terminal de retenue sortante (Ci) que lorsque les premier (T102), troisième (201), et cinquième (T203) moyens de commutation sont conducteurs;
la valeur mémorisée n'est couplée au terminal de retenue sortante (Ci) que lorsque le sixième (T202) et le premier moyens de commutation (T102) sont conducteurs; et
le premier terminal d'entrée (A) n'est couplé au terminal de retenue sortante (Ci) que lorsque les quatrième et premier (T102) moyens de commutation sont conducteurs.

8. Dispositif logique tel que revendiqué dans la revendication 1, dans lequel le moyen de contrôle comprend :

une porte NON-OU exclusif ayant deux terminaux d'entrée couplés respectivement aux premier (A) et deuxième (B) terminaux d'entrée de signal, et un terminal de sortie;
un premier inverseur (I104), la sortie du premier inverseur contrôlant le deuxième moyen de commutation (T101);
un moyen pour fournir une valeur mémorisée;
un troisième moyen de commutation (CL3), dans lequel le troisième moyen de commutation sélectionne entre fournir la valeur mémorisée et une sortie de signal de la porte NON-OU exclusif au terminal d'entrée du premier inverseur; et
un deuxième inverseur connecté au terminal de sortie du premier inverseur, le terminal de sortie du deuxième inverseur contrôlant le premier moyen de commutation (T102).

9. Dispositif logique tel que revendiqué dans la revendication 1, dans lequel chaque bloc logique a :

une porte NON-OU exclusif (X101);
une première cellule de mémoire (CLO) et une deuxième cellule de mémoire (CL1);
un multiplexeur (M2) avec au moins deux entrées et une sortie;
un troisième terminal d'entrée (F3);
dans lequel la sortie de la première cellule de mémoire est une entrée du multiplexeur (M2);
le troisième terminal d'entrée (F3) est une entrée du multiplexeur (M2);
la sortie de la deuxième cellule de mémoire sélectionne entre connecter la première cellule de mémoire et connecter le troisième terminal d'entrée au terminal de sortie du multiplexeur (M2);
la sortie du multiplexeur est une entrée de la porte NON-OU exclusif (X101); le deuxième terminal d'entrée (B) est couplé à une entrée de la porte NON-OU exclusif (X101); et
la porte NON-OU exclusif et le premier terminal d'entrée contrôlent le moyen pour causer.

10. Dispositif logique tel que revendiqué dans la revendication 1, dans lequel chaque bloc logique a au moins:

un premier circuit et un deuxième circuit, le terminal de retenue sortante du premier circuit étant connecté au terminal de retenue entrante du deuxième circuit, le terminal de retenue sortante du deuxième circuit étant couplé au terminal de retenue sortante du bloc logique;
au moins un terminal de retenue entrante de bloc logique; et
un moyen pour utiliser un signal sur le terminal de retenue entrante de bloc logique ou sur l'un des terminaux de retenue entrante de bloc logique en tant que signal de retenue entrante sur le terminal de retenue entrante du premier circuit.

11. Dispositif logique tel que revendiqué dans la revendication 10, dans lequel le deuxième circuit comprend un moyen pour comparer un signal sur le terminal de retenue sortante du premier circuit au signal de retenue entrante sur le premier circuit, le moyen étant agencé pour détecter une condition de débordement.

**12.** Dispositif logique tel que revendiqué dans la revendication 11, dans lequel le moyen pour comparer comprend :

un premier multiplexeur pour sélectionner entre le signal de retenue entrante du premier circuit et un premier signal d'entrée vers le deuxième circuit;

un deuxième multiplexeur pour sélectionner entre le signal de retenue sortante du premier circuit et un deuxième signal d'entrée vers le deuxième circuit;

un moyen pour contrôler les premier et deuxième multiplexeurs; et

un moyen pour générer la fonction OU exclusif des signaux fournis par les premier et deuxième multiplexeurs.

**13.** Dispositif logique tel que revendiqué dans la revendication 12, dans lequel le moyen pour générer la fonction OU exclusif des signaux fournis par les multiplexeurs comprend un générateur de fonction combinatoire.

**14.** Dispositif logique tel que revendiqué dans la revendication 13, dans lequel le moyen pour générer comprend un générateur de fonction logique avec au moins deux entrées, dans lequel chacun des terminaux d'entrée est une entrée séparée vers le générateur de fonction.

**15.** Dispositif logique tel que revendiqué dans la revendication 1, dans lequel chaque bloc logique comprend :

un moyen pour recevoir un premier signal d'entrée et pour placer le premier signal d'entrée sur ledit premier terminal d'entrée;

un moyen pour recevoir un deuxième signal d'entrée;

un moyen pour sélectionner entre placer le deuxième signal d'entrée, le complément du deuxième signal d'entrée, et une valeur constante sur le deuxième terminal d'entrée.

**16.** Dispositif logique tel que revendiqué dans la revendication 15, dans lequel le moyen pour sélectionner comprend :

un moyen pour remplacer le deuxième signal d'entrée par une première valeur constante;

un moyen pour contrôler si le deuxième signal d'entrée sera remplacé par la première valeur constante; et

un moyen pour sélectionner si la première valeur constante sera inversée.

**17.** Dispositif logique tel que revendiqué dans l'une quelconque des revendications précédentes dans lequel chaque bloc logique a un terminal de retenue entrante et un terminal de retenue sortante, et le terminal de retenue sortante de chaque bloc logique est couplé à au moins un terminal de retenue entrante d'un bloc logique prédédant le bloc logique et au terminal de retenue entrante d'un bloc logique suivant le bloc logique.

**18.** Dispositif logique tel que revendiqué dans la revendication 17, dans lequel les blocs logiques sont positionnés dans une matrice rectangulaire de rangées horizontales et de colonnes verticales et dans lequel le bloc logique précédant chaque bloc logique et le bloc logique le suivant sont positionnés dans la même colonne ou dans la même rangée que chaque dit bloc logique.

**19.** Dispositif logique tel que revendiqué dans la revendication 17 ou 18, dans lequel le bloc logique précédant chaque bloc logique et le bloc logique le suivant sont contigus audit chaque bloc logique.

**20.** Dispositif logique tel que revendiqué dans la revendication 1, dans lequel chaque bloc logique comprend au moins un premier étage (étage F) et un deuxième étage (étage G), et dans lequel chaque étage comprend :

au moins un premier terminal d'entrée et un deuxième terminal d'entrée;

un terminal de retenue entrante;

un terminal de retenue sortante;

un circuit spécialisé pour exécuter une logique de retenue avec au moins trois entrées et au moins une sortie; dans lequel les trois entrées ou trois des trois entrées au moins comprennent :

un signal sur le premier terminal d'entrée;

un signal sur le deuxième terminal d'entrée; et

un signal sur le terminal de retenue entrante, dans lequel la sortie est une fonction de retenue des trois entrées.

**21.** Dispositif logique tel que revendiqué dans la revendication 20, dans lequel le terminal de retenue sortante du premier étage est directement connecté au terminal de retenue entrante du deuxième étage, et le terminal de retenue sortante de l'un des blocs logiques est connecté par un moyen de tamponnement au terminal de retenue entrante d'un autre des blocs logiques.

**22.** Dispositif logique tel que revendiqué dans la revendication 21, dans lequel chaque bloc logique comprend un deuxième moyen pour calculer la fonction de retenue du signal sur le premier terminal d'entrée, le signal sur le terminal de retenue entrante, et un complément du signal sur le deuxième terminal d'entrée, et un moyen pour sélectionner entre utiliser le premier moyen et utiliser ledit deuxième moyen.

**23.** Dispositif logique tel que revendiqué dans la revendication 1, comprenant des lignes spécialisées d'interconnexion pour interconnecter le matériel pour exécuter la fonction de retenue dans un premier bloc logique au matériel pour exécuter la fonction de retenue dans au moins un deuxième bloc logique.

**24.** Dispositif logique tel que revendiqué dans la revendication 23, dans lequel les lignes spécialisées d'interconnexion comprennent des lignes pour interconnecter le matériel pour exécuter la fonction de retenue dans un premier bloc logique au matériel pour exécuter la fonction de retenue dans au moins un troisième bloc logique.

**25.** Dispositif logique tel que revendiqué dans la revendication 24, comprenant des lignes programmables d'interconnexion, dans lequel le matériel pour exécuter la fonction de retenue comprend :

un moyen pour sélectionner le signal de retenue entrante du troisième bloc logique d'entre au moins des signaux de retenue sortante sur les terminaux de retenue sortante des premier et deuxième blocs logiques.

**26.** Dispositif logique tel que revendiqué dans la revendication 24 ou 25, dans lequel les blocs logiques sont situés dans des rangées et des colonnes à l'intérieur de la structure de circuit intégré, et le troisième bloc logique est positionné contigu aux premier et deuxième blocs logiques.

**27.** Dispositif logique tel que revendiqué dans la revendication 26, dans lequel le premier bloc logique est positionné dans la même rangée que le troisième bloc logique et le deuxième bloc logique est positionné dans la même colonne que le troisième bloc logique.

**28.** Dispositif logique tel que revendiqué dans la revendication 24 ou 25, dans lequel les blocs logiques sont positionnés dans des rangées et des colonnes et les premier et deuxième blocs logiques sont situés dans la même rangée ou les mêmes colonnes que le troisième bloc logique.

**FIG. 1a**
**(Prior Art)**

Schematic Symbol For Full Adder
**FIG. 1b**
**(Prior Art)**

**FIG. 2**
**(Prior Art)**

FIG. 3
(Prior Art)

FIG. 4
PRIOR ART

(PRIOR ART)
FIG. 5

**FIG. 6**

|   | A | B | $C_{IN}$ | $C_{OUT}$ |
|---|---|---|---|---|
| 1 | 0 | 0 | 0 | 0 |
| 2 | 0 | 0 | 1 | 0 |
| 3 | 0 | 1 | 0 | 0 |
| 4 | 1 | 0 | 0 | 0 |
| 5 | 0 | 1 | 1 | 1 |
| 6 | 1 | 0 | 1 | 1 |
| 7 | 1 | 1 | 0 | 1 |
| 8 | 1 | 1 | 1 | 1 |

**FIG. 7**

**FIG. 8**

25

**FIGURE 9**

EP 0 456 475 B1

BLOCK 1

Carry In<sub>T</sub>

Carry Out

Carry In<sub>B</sub>

CLB

BLOCK 2

Carry In<sub>T</sub>

Carry Out

Carry In<sub>B</sub>

CLB

BLOCK 3

Carry In<sub>T</sub>

Carry Out

Carry In<sub>B</sub>

CLB

BLOCK 4

Carry In<sub>T</sub>

Carry Out

Carry In<sub>B</sub>

CLB

L112

L113

**FIG. 10**

FIG. 11

FIG. 12